# EUROPEAN PATENT APPLICATION

(11) **EP 1 608 124 A2**
(43) Date of publication of application: **21.12.2005**
(21) Application number: 05007403.8
(22) Date of filing: 05.04.2005
(51) Int. Cl.: H04L 29/06, H04L 29/08

(54) **Device and methods for downloading data**

(30) Priority: 10.06.2004 CN 200410048952
(71) Applicant: ASUSTeK Computer Inc., Peitou, Taipei (TW)
(72) Inventor: Deng, Ten-Long, Township, Hsinchu County (TW)
(74) Representative: Urner, Peter

(57) **Abstract**

A method of downloading data from a network using a network device. A network device coupled to a network is first provided. The network device uses a network protocol to download data from the network. Next, the network device downloads data corresponding to search parameters from the network according to the network protocol. The downloaded data can be stored on a storage device. The network can be the Internet or a wireless one.

## Description

### BACKGROUND

The invention relates to methods of data download, and in particular to downloading data from a network using network devices.

Conventionally, to download data from a network, a computer must first be connected. Search parameters are then established. The connected computer then searches the network for corresponding data using the peer-to-peer (P2P) protocol. The search result is displayed on a server or a computer for user selection. After receiving a download command, the server or computer begins downloading.

The conventional method has some shortcomings. First, the download is typically slow, such that the server or computer must remain powered on during the entire operation. Additionally, download fees are occasionally assessed based on accumulated download time. Moreover, downloaded data may contain computer viruses or malicious code, posing a threat to unprotected servers or computers.

### SUMMARY

Methods and devices for downloading data are provided. An exemplary embodiment of the invention provides a method of downloading data from a network using a network device. In some embodiments, a network device coupled to a network is first provided. The network can be the Internet or a wireless network and the network device comprises a network protocol for downloading data therefrom. The network protocol can be a peer-to-peer network protocol or others. The network device downloads data corresponding to search parameters according to the network protocol. The search parameters can be entered by users or preestablished in the network device. The downloaded data is then stored to a storage device. The storage device can be a stand-alone device or established in the network device.

### DESCRIPTION OF THE DRAWINGS

The present invention can be more fully understood by reading the subsequent detailed description and examples with references made to the accompanying drawings, wherein:
Fig. 1 is a flowchart of an embodiment of a method for downloading data from a network using a network device.
Fig. 2 is a diagram of an embodiment of a network device.
Fig. 3 is a diagram of an embodiment of a system of downloading data from a network using a network device.

### DESCRIPTION

Presently, download fees are calculated periodically, such as monthly, such that downloading time is no longer an important consideration. Thus, network devices automatically downloading and storing data on a device isolated from the server or computer is an important development. A network device is a device using for network connection or distribution, such as a router, separated from a server or computer.

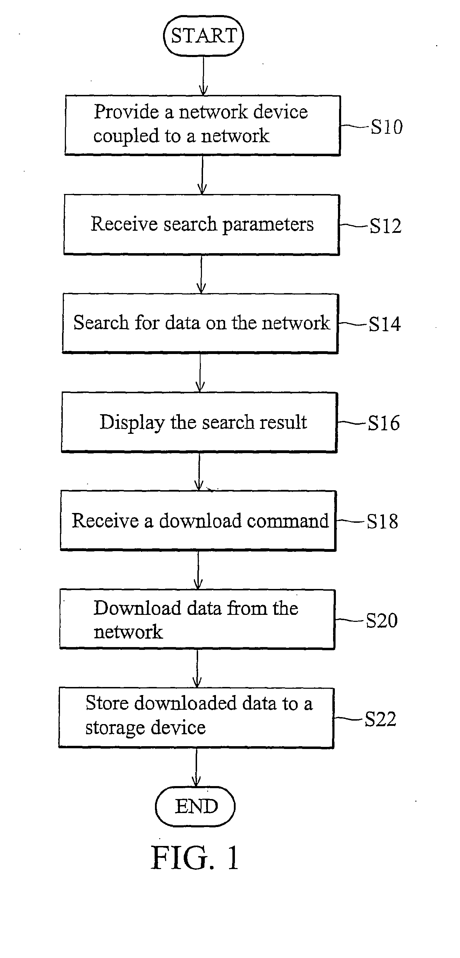

Fig. 1 is a flowchart of an embodiment of a method of downloading data from a network using a network device. In some embodiments, a network device coupled to a network is first provided (step S10). The network can be the Internet or a wireless network. The network device can be implemented in a router. The network device comprises a network protocol, such as P2P, for downloading data.

Search parameters are then received (step S12). The network device searches for data on the network according to the search parameters (step S14) and displays the search result (step S16). The network device then receives a download command (step S18). The search parameters may comprise a predetermined download time. If so, the network device downloads data from the network in the predetermined download time.

The network device downloads data corresponding to the search parameters from the network according to the download command and the network protocol (step S20). The downloaded data is stored to a storage device (step S22). The storage device can be a stand-alone device or established in the network device.

Some embodiments of the network device, such as a router, utilize provided always-on feature to execute a data download. Some embodiments of a storage device can be comprised in the network device, such as a storage unit in a router, or established as a stand-alone device, such as a network attached storage (NAS) device. The storage device can also be connected to the network device via a transmission channel, such as universal serial bus (USB) or IEEE1394 interface. Thus, because a network device is separate from a server or computer, virus invasion problems can be potentially avoided. Additionally, the network device can be remotely controlled, thus, potentially increasing convenience and data security.

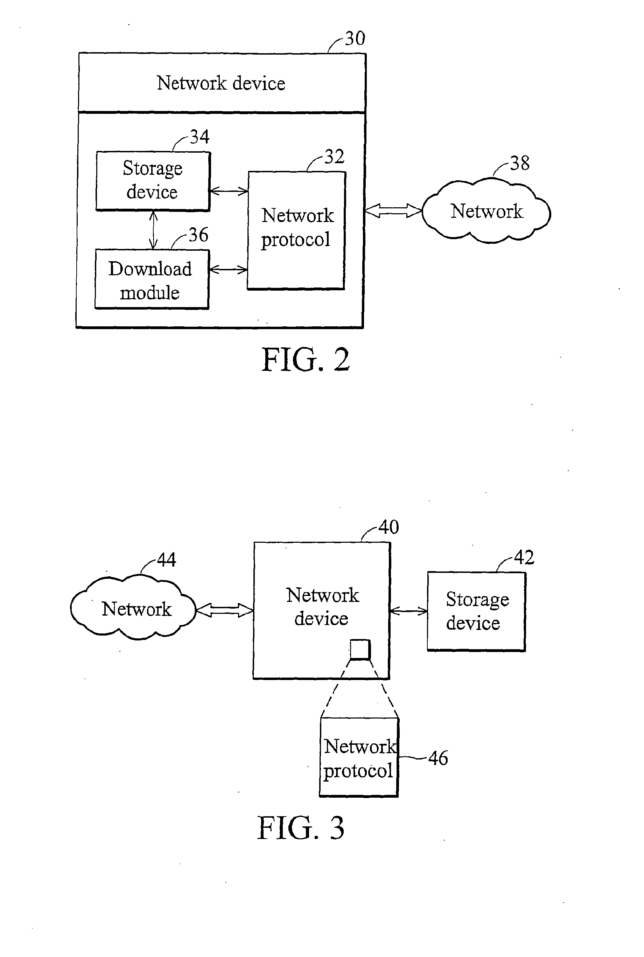

Fig. 2 is a diagram of an embodiment of a network device. In an exemplary embodiment, a network device 30 comprises a storage device 34 and a download module 36. The network device 30 is coupled to a network 38 and conforms to a network protocol 32, such as P2P, for downloading data from network 38. The network 38 can be the Internet or a wireless network.

The download module 36 is coupled to the storage device 34. The download module 36 searches data on the network 38 according to search parameters and displays the search result. The search result can be displayed on an user interface. The search result can also be sent to an user by messages to wait a download command.

If a download command is received by the download module 36, data corresponding to the search parameters is downloaded from the network 38 according to the network protocol 32. The search parameters may comprise predetermined download time, if so, the download module 36 downloads data corresponding to the search parameters from the network 38 according the network protocol 32 at the predetermined download time. The download module 36 stores the downloaded data to the storage device 34. In some embodiments, the download module can be implemented in firmware and the network device 30 can be implemented as a router.

Fig. 3 is a diagram of an embodiment of a system of downloading data from a network using a network device. In an embodiment of a system for downloading data from a network comprises a network device 40. The network device 40 is coupled to a storage device 42 and a network 44, such as the Internet or a wireless network. The storage device 42 can be a network storage disk.

The network device 40 comprises a network protocol 46, such as a peer-to-peer network protocol, for downloading data from the network 44. The network device 40 receives search parameters and searches corresponding data on the network 44 accordingly. The search parameters can be entered by users or preestablished in the network device 40. The search result is then displayed.

The network device 40 receives a download command and downloads data corresponding to the search parameters from the network according to the download command and the network protocol 46. If the search parameters comprise predetermined download time, the network device 40 downloads data corresponding to the search parameters from the network 44 according the network protocol 46 at the predetermined download time. The downloaded data is stored to the storage device 42.

Thus, methods and systems for downloading data from a network using a network device may potentially increase convenience and data security. Additionally, data can be downloaded from a network according to preferred search parameters and at predetermined time, potentially resolving data download problems.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A method of downloading data from a network using a network device, comprising :
providing a network device coupled to a network, wherein the network device comprises a network protocol for downloading data from the network; and
downloading data corresponding to at least one search parameter from the network according to the network protocol.

2. The method of downloading data from a network using a network device as claimed in claim 1, further storing the downloaded data to a storage device.

3. The method of downloading data from a network using a network device as claimed in claim 2, wherein the network device comprises the storage device.

4. The method of downloading data from a network using a network device as claimed in claim 1, wherein the step of downloading data from the network using the network device further comprises:
searching for data on the network according to the search parameters;
displaying the search result on a display device;
receiving a download command; and
downloading data corresponding to the search parameters from the network according to the download command and the network protocol.

5. The method of downloading data from a network using a network device as claimed in claim 1, wherein the search parameters comprise predetermined download time, and the network device downloads data corresponding to the search parameters from the network according to the network protocol at the predetermined download time.

6. The method of downloading data from a network using a network device as claimed in claim 1, wherein the network protocol is peer-to-peer.

7. The method of downloading data from a network using a network device as claimed in claim 1, wherein the network is the Internet or a wireless network.

8. A network device, wherein the network device is coupled to a network and comprises a network protocol for downloading data from the network, comprising:
a storage device; and
a download module, coupled to the storage device, downloading data corresponding to at least one search parameter from the network according to the network protocol and storing the downloaded data to the storage device.

9. The network device as claimed in claim 8, wherein the download module further searches for data on the network according to the search parameters, displays the search result, receives a download command, and downloads data corresponding to the search parameters from the network according to the download command and the network protocol.

10. The network device as claimed in claim 8, wherein the search parameters comprise predetermined download time, and the download module downloads data corresponding to the search parameters from the network according to the network protocol at the predetermined download time.

11. The network device as claimed in claim 8, wherein the network protocol is peer-to-peer.

12. The network device as claimed in claim 8, wherein the network is the Internet or a wireless network.

13. The network device as claimed in claim 8, wherein the download module is implemented in firmware.

14. A system of downloading data from a network using a network device, comprising:
a storage device; and
a network device, coupled to the storage device and a network, comprising a network protocol for downloading data from the network, downloading data corresponding to at least one search parameter from the network according to the network protocol, and storing the downloaded data to the storage device.

15. The system of downloading data from a network using a network device as claimed in claim 14, wherein the network device further searches for data on the network according to the search parameters, displays the search result, receives a download command, and downloads data corresponding to the search parameters from the network according to the download command and the network protocol.

16. The system of downloading data from a network using a network device as claimed in claim 14, wherein the search parameters comprise predetermined download time and the network device downloads data corresponding to the search parameters from the network according the network protocol at the predetermined download time.

17. The system of downloading data from a network using a network device as claimed in claim 14, wherein the network protocol is peer-to-peer.

18. The system of downloading data from a network using a network device as claimed in claim 14, wherein the network is the Internet or a wireless network.
